# EUROPEAN PATENT SPECIFICATION

(11) **EP 3 761 711 B1**
(45) Date of publication and mention of the grant of the patent: **30.10.2024**
(21) Application number: 19792517.5
(22) Date of filing: 28.04.2019
(51) Int. Cl.: H04W 48/08, H04W 76/27, H04L 67/53

(54) **CAPABILITY OPENING METHOD, RELATED DEVICE AND SYSTEM**
FÄHIGKEITSÖFFNUNGSVERFAHREN, ZUGEHÖRIGE VORRICHTUNG UND SYSTEM
PROCÉDÉ D'OUVERTURE DE CAPACITÉS, DISPOSITIF ET SYSTÈME ASSOCIÉS

(30) Priority: 28.04.2018 CN 201810399673
(43) Date of publication of application: 06.01.2021
(73) Proprietor: HUAWEI TECHNOLOGIES CO., LTD., Shenzhen, Guangdong 518129 (CN)
(72) Inventor: LU, Wei, Shenzhen, Guangdong 518129 (CN); LI, Huan, Shenzhen, Guangdong 518129 (CN); JIN, Weisheng, Shenzhen, Guangdong 518129 (CN)
(74) Representative: Thun, Clemens
(86) International application number: PCT/CN2019/084741
(87) International publication number: WO 2019/206322

(56) References cited:
- WO-A1-2014/117854
- CN-A- 101 022 653
- CN-A- 107 534 833
- US-A1- 2013 316 716
- HUAWEI ET AL: "Clarification of the AN release condition in AMF", vol. SA WG2, no. Montreal, Canada;, 20 February 2018 (2018-02-20), XP051408538, Retrieved from the Internet <URL:http://www.3gpp.org/ftp/tsg%5Fsa/WG2%5FArch/TSGS2%5F126%5FMontreal/Docs/> [retrieved on 20180220]
- HUAWEI ET AL: "Solution for Key Issue #4: MICO mode enhanced with Active Timer", vol. SA WG2, 19 April 2018 (2018-04-19), XP051432627, Retrieved from the Internet <URL:http://www.3gpp.org/ftp/Meetings%5F3GPP%5FSYNC/SA2/Docs/> [retrieved on 20180419]

## Description

### TECHNICAL FIELD

This application relates to the field of wireless communications technologies, and in particular, to a capability exposure method, a related apparatus, and a system.

### BACKGROUND

The enrichment of various internet applications has resulted in growing requirements of a third-party service provider for information exchange and network personalization of network operators, so that network capability exposure gradually becomes a mainstream of future network technologies.

In a future communications network, a network capability exposure scenario may occur in fields such as the internet of vehicles, industrial networks, mobile medical monitoring, high-definition videos, emergency services, and e-finance.

However, a current mobile communications network exposes limited network capabilities to the third-party service provider. Consequently, service requirements of the third-party service provider in a new radio (new radio, NR) communications system or a future communications system cannot be well supported.

The 3GPP contribution Huawei et al.: "Clarification of the AN release condition in AMF", S2-181994 is a standardization document dealing with a network capability exposure method.

The 3GPP contribution Huawei et al.: "Solution for key issue #4: MICO mode enhanced with active timer", S2-184037 is also concerned with network capability exposure, especially in conjunction with MICO.

### SUMMARY

Embodiments of this application provide a capability exposure method, and related appratuses so that a mobile communications network can expose more network capabilities to a third-party service provider, thereby better supporting service requirements of the third-party service provider. The above mentioned problem is solved by the subject matter of the independent claims. Further implementation forms are provided in the dependent claims.

### BRIEF DESCRIPTION OF DRAWINGS

To describe technical solutions in embodiments of this application more clearly, the following describes the accompanying drawings for describing the embodiments of this application or the background.
FIG. 1 is a schematic architectural diagram of a wireless communications system according to this application;
FIG. 2 is a schematic flowchart of a capability exposure method according to this application;
FIG. 3 is a schematic flowchart of another capability exposure method according to this application;
FIG. 4 is a schematic flowchart of still another capability exposure method according to this application;
FIG. 5 is a schematic flowchart of still another capability exposure method according to this application; only the steps of the method illustrated in figures 2 to 5 which are associated to the access network device, and which are correspondingly defined in claims 1 to 3, correspond to the present invention.
FIG. 6 is a schematic diagram of a network architecture of a UL CL according to an embodiment in FIG. 5;
FIG. 7 is a schematic architectural diagram of an application server according to an embodiment of this application;
FIG. 8 is a schematic architectural diagram of an access network device according to the invention as defined by claim 4;
FIG. 9 is a schematic architectural diagram of a core network device according to an embodiment of this application;
FIG. 10 is a functional block diagram of a communications system and a related communications apparatus according to this application; and
FIG. 11 is a functional block diagram of another communications system and another related communications apparatus according to this application.

### DESCRIPTION OF EMBODIMENTS

Terms used in implementations of this application are merely used to explain specific embodiments of this application, but are not intended to limit this application.

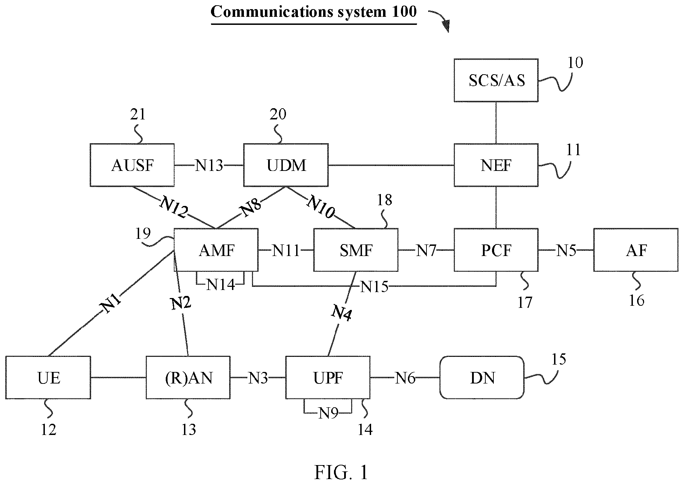

FIG. 1 shows an architecture of a communications system 100 according to this application. The communications system 100 shown in FIG. 1 includes a service capability server/application server (service capability server/applicant server, SCS/AS) 10 provided by a third-party service provider and a mobile communications system provided by a mobile communications operator. The service capability server/application server 10 is an application server of the third-party service provider and/or a network operator, and may provide one or more application services, such as a voice service, a video service, and a location based service. The mobile communications system exposes network capabilities to the application server 10. The mobile communications system is not limited to a long term evolution (long term evolution, LTE) system, and may alternatively be a future evolved 5th generation (the 5th Generation, 5G) mobile communications system, a new radio (NR) system, a machine-to-machine (machine to machine, M2M) communications system, or the like. As shown in FIG. 1, the mobile communications system may include a terminal device 12, an access network device 13 and a core network device.

The terminal device 12 may be user equipment (user equipment, UE), a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal device, or another device that can access a network. The terminal device 12 and the access network device 13 communicate with each other by using an air interface technology.

The access network ((R)AN) device 13 may include a RAN device or an AN device. The RAN device is mainly a 3GPP wireless network device, for example, a base station. The AN device may be a non-3GPP defined access network device, for example, a Wi-Fi router. The RAN device is mainly responsible for functions, such as radio resource management, quality of service (quality of service, QoS) management, and data compression and encryption on an air interface side. The RAN device may include a macro base station, a micro base station (also referred to as a small cell), a relay station, or the like. In systems using different radio access technologies, devices having a base station function may have different names. For example, in a 5th generation (5th generation, 5G) system, the device is referred to as a gNB; in the LTE system, the device is referred to as an evolved NodeB (evolved NodeB, eNB or eNodeB); and in a 3rd generation (3rd generation, 3G) system, the device is referred to as a NodeB (Node B). The AN device allows a non-3GPP technology to be used for interconnection and interworking between a terminal device and a 3GPP core network. For example, the non-3GPP technology includes wireless fidelity (wireless fidelity, Wi-Fi), worldwide interoperability for microwave access (worldwide interoperability for microwave access, WiMAX), and a code division multiple access (code division multiple access, CDMA) network, or the like.

As shown in FIG. 1, the core network device may include an NEF 11, a UPF 14, an AF 16, a PCF 17, an SMF 18, an AMF 19, UDM20, an AUSF 21, and the like.

The network exposure function (network exposure function, NEF) network element 11 mainly supports secure interaction between a 3GPP network and a third-party application. The NEF can securely expose mobile communications network capabilities and mobile communications events to a third party, to enhance or improve application service quality. The 3GPP network can also securely obtain related data from the third party, to enhance intelligent decision-making of the network. In addition, the network element can restore structured data from a unified database or store structured data in a unified database.

The user plane function (user plane function, UPF) network element 14 is responsible for data packet forwarding and receiving. The UPF network element may receive user data from a data network, and transmit the user data to the terminal device through the access network device. Alternatively, the UPF network element may receive user data from the terminal device through the access network device, and forward the user data to a data network. A transmission resource and a scheduling function in the UPF network element that serve the terminal device are managed and controlled by an SMF network element. The UPF network element may temporarily store a data packet.

The application function (application function, AF) network element 16 is a device such as an application server that provides an application service for the terminal device, and may interact with a 3GPP core network to provide a service, for example, affect a data routing decision, provide a policy control function, or provide some third-party services for a network side.

The policy control function (policy control function, PCF) network element 17 can mainly provide a unified policy framework, to control network behavior; provide a policy rule for a control layer device; and provide policy information for the terminal device. In addition, the PCF network element 17 is responsible for obtaining user subscription information related to policy decision.

The session management function (session management function, SMF) network element 18 is responsible for user plane network element selection, user plane network element redirection, Internet Protocol (internet protocol, IP) address allocation, QoS control, and establishment, modification, and release of a data transmission channel. The SMF network element may temporarily store a data packet.

The access and mobility management function (access and mobility management function, AMF) network element 19 is a core network element and is mainly responsible for signaling processing such as access control, mobility management, attachment, detachment, and gateway selection. When providing a service for a session of the terminal device, the AMF network element provides a control plane storage resource for the session, to store a session identifier, an SMF network element identifier associated with the session identifier, and the like.

The unified data management (unified data management, UDM) network element 20 is responsible for unified data management, and includes two parts: an application front end (FE) and a user data repository (UDR). The FE can access subscriber information stored in the UDR. The FE supports authentication credit processing, user identity processing, access authorization, subscription management, SMS message management, and the like. The UDR is a storage server of user subscription data and provides a subscription data storage service.

The authentication server function (authentication server function, AUSF) network element 21 mainly provides an authentication and authorization function.

In addition, the communications system 100 further includes a data network (data network, DN) 15. The DN 15 is a network that includes an application function and that provides an application data server for the terminal device.

It needs to be understood that a network function such as the NEF 11, UPF 14, the AF 16, the PCF 17, the SMF 18, the AMF 19, the UDM 20, or the AUSF 21 in FIG. 1 belongs to the core network device in the mobile communications system. To simplify the accompanying drawings, an unstructured data storage network function (unstructured data storage network function, UDSF), a structured data storage network function (structured data storage network function, SDSF), and an NF repository function (NF repository function, NRF) in the core network are not shown.

It needs to be understood that the mobile communications system in FIG. 1 is a reference-point-based communications architecture. The reference-point-based communications architecture reflects interaction between point-to-point network functions. For example, the UDM 20 and the SMF 18 interact with each other based on a reference point N10. For definitions and descriptions of the reference points in the figure, refer to related 3GPP protocols, such as TS23.501, TS23.502, and TS23.503. Details are not described herein again. In addition, the NEF communicates with another network element (such as the PCF network element or the UDM network element) through a service-based interface exhibited by NEF (Service-based interface exhibited by NEF, Nnef).

Currently, the application server 10 may implement an exposed application programming interface (application programming interface, API) provided by the mobile communications operator, to obtain the network capabilities exposed by the mobile communications operator. The network capabilities exposed by the mobile communications operator mainly include a communication capability, context information, subscription information, and a control capability. The communication capability refers to voice, SMS message, and multimedia message services. The context information includes real-time user information, for example, a user location, a terminal device capability, and a data connection type. The subscription information includes information such as a subscription identifier and a priority. The control capability refers to a function of control and monitoring service quality, policies, and security. During actual application, the third-party service provider may develop more new services that meet actual requirements of a user based on the existing network capabilities.

However, a current mobile communications network exposes limited network capabilities to the third-party service provider. Consequently, service requirements of the third-party service provider in a new radio (NR) communications system or a future communications system cannot be well supported.

This application provides a capability exposure method, so that the mobile communications network can expose more network capabilities to the third-party service provider, thereby better supporting the service requirements of the third-party service provider. In this application, for an RRC inactive state newly introduced to NR, the network capabilities exposed by the mobile communications operator may include setting duration for which the terminal device is in the RRC inactive state. Alternatively, in this application, for a mobile initiated connection only (mobile initiated connection only, MICO) mode supported in NR, the network capabilities exposed by the mobile communications operator may include setting a state of the terminal device in the MICO mode. The capability exposure method provided in this application is described in detail in the following embodiments. Details are not described herein again.

The communications system 100 shown in FIG. 1 is merely intended to more clearly describe the technical solutions in this application, but constitutes no limitation on this application. A person of ordinary skill in the art may know that, with evolution of the network architecture and emergence of a new service scenario, the technical solutions provided in this application are also applicable to a similar technical problem.

This application provides a capability exposure method, so that a mobile communications network can expose more network capabilities to a third-party service provider, thereby better supporting service requirements of the third-party service provider.

First, an RRC inactive state newly introduced to NR and a MICO mode of a terminal device supported in NR in this application are described.

### (1) RRC inactive state

In a large-scale internet of things, a large quantity of devices transmit a small amount of data in a sporadic manner, resulting in excessively high signaling overheads. To reduce power consumption, implement fast access, and reduce signaling overheads, a new RRC state, namely, the RRC inactive state, is introduced to NR. Both the RRC inactive state and an RRC connected state are connected modes. In the RRC inactive state, some RAN contexts (for example, a security context and UE capability information) are still retained. However, when a connection between the terminal device and a RAN device is released, the terminal device can quickly transfer from the RRC inactive state to the RRC connected state by using a message similar to a paging message, so that an amount of signaling is reduced.

For the terminal device in the RRC inactive state, when an uplink data packet or a downlink data packet is to be transmitted, a connection between the terminal device and an access network device needs to be first established. Specifically, when the downlink data packet arrives, the access network device initiates a paging process to the terminal device, so that the connection between the terminal device and the access network device is established.

### (2) MICO mode

Support for the MICO mode of the terminal device is added to a 5G system, so that the terminal device can negotiate, during initial registration or registration update, that the terminal device is in the MICO mode. In addition, when the terminal device is in the MICO mode, an AMF considers that the terminal device in an idle mode is unreachable, and rejects any request for transmitting downlink data to the terminal device. In other words, when the terminal device in the MICO mode is in the idle mode, only the terminal device can initiate a signaling process of data transmission, and a network side cannot initiate the signaling process of data transmission; or when the terminal device in the MICO mode is in the connected mode, both a network side and the terminal device can initiate a signaling process of data transmission.

In this application, for the RRC inactive state newly introduced to NR, network capabilities exposed by a mobile communications operator may include setting duration for which the terminal device is in the RRC inactive state. Through exposure of the network capabilities, the third-party service provider may request the network side to set the duration for which the terminal device is in the RRC inactive state. The network side may respond to the request of the third-party service provider, and correspondingly set the duration for which the terminal device is in the RRC inactive state, so that the third-party service provider can transmit the downlink data packet to the terminal device.

Alternatively, in this application, for the MICO mode supported in NR, network capabilities exposed by a mobile communications operator may include setting a state of the terminal device in the MICO mode. Through exposure of the network capabilities, the third-party service provider may request the network side to set the state of the terminal device in the MICO mode. The network side may respond to the request of the third-party service provider, and correspondingly set the state of the terminal device in the MICO mode, so that the third-party service provider can transmit the downlink data packet to the terminal device.

In this application, the RRC inactive state refers to as an inactive state of the connected mode, and the RRC connected state refers to as an active state of the connected mode. Not limited to the RRC inactive state, the inactive state may further include another connected state similar to the RRC inactive state. Not limited to the RRC connected state, the active state may further include another connected state similar to the RRC connected state. Names of the RRC inactive state and the RRC connected state may be changed in a future communications standard. This does not affect the technical solutions provided in this application.

It needs to be understood that the active state and the inactive state are merely two specific example states included in the connected mode to which the capability exposure method provided in this application is applicable. In subsequent content, the active state and the inactive state in this application may be respectively referred to as a first state of the connected mode and a second state of the connected mode.

### (1) Embodiment 1

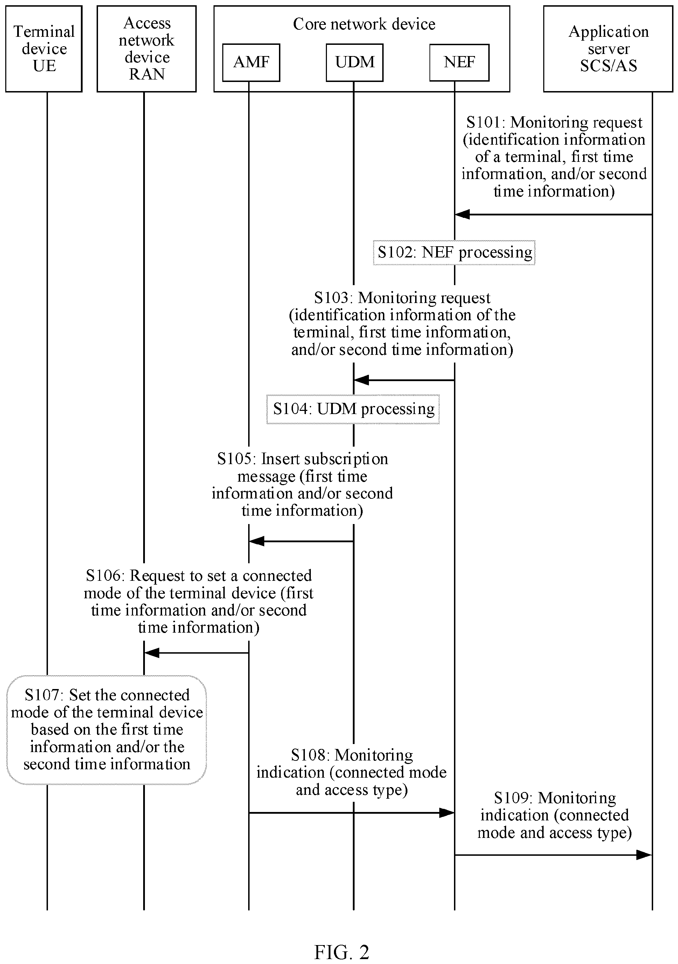

In this embodiment, for an RRC inactive state newly introduced to NR, network capabilities exposed by a mobile communications operator may include setting duration for which a terminal device is in the RRC inactive state. As shown in FIG. 2, a capability exposure method provided in Embodiment 1 may include the following steps.

S101 to S106: An access network device obtains a request message from an application server. The request message may include first time information and/or second time information. The first time information may be used to set a time for which a terminal device is in a first state of a connected mode. The second time information may be used to set a time for which the terminal device is in a second state of the connected mode.

Herein, the first state of the connected mode may be an active state of the connected mode, for example, an RRC connected state. The second state of the connected mode may be an inactive state of the connected mode, for example, an RRC inactive state. The first time information may alternatively be information used to set transmission duration of a data packet, for example, information about a maximum response time. The second time information may alternatively be information used to set a transmission delay of the data packet, for example, information about a maximum delay time.

Herein, the request message from the application server refers to a series of request messages that are initiated by the application server, pass through a core network, and finally arrive at the access network device. The series of request messages are jointly used to request the access network device to set the connected mode of the terminal device. Herein, core network elements through which the request message passes may specifically include but are not limited to an NEF network element, a UDM network element, and an AMF network element.

As shown in FIG. 2, a process in which the access network device obtains the request message from the application server may include but is not limited to the following steps.

S101: The application server sends a monitoring request to the NEF network element. The monitoring request may include first time information and/or second time information. Optionally, the monitoring request may further include identification information of the application server and/or identification information of the terminal device. The identification information of the terminal device may be an external identifier of the terminal device, a permanent equipment identifier (Permanent Equipment Identifier, PEI), or the like. Optionally, the monitoring request may further include identification information of an application. The identification information of the application is used to identify a third-party application that initiates a monitoring request process. Optionally, the monitoring request may further include a monitoring event type. In this application, the monitoring event type is a type of an event of monitoring the connected mode of the terminal device.

S102: After receiving the monitoring request sent by the application server, the NEF network element may perform NEF processing.

The NEF processing may include but is not limited to the following process.

Optionally, the NEF network element may store the identification information of the application. Optionally, the NEF network element may not store the identification information of the application, but obtains the information from the application server when the NEF network element needs the information. A specific implementation process in which the NEF network element obtains the identification information of the application from the application server is not limited in this application.

Optionally, the NEF network element may allocate an NEF reference identifier.

Optionally, the NEF network element may determine, according to a policy of an operator, whether the monitoring request sent by the application server is valid. If the monitoring request is invalid, the NEF network element sends a response message to the SCS/AS. The response message may include information such as a rejection reason.

S103: The NEF network element sends a monitoring request to the UDM network element. The monitoring request may include first time information and/or second time information. Optionally, the monitoring request may further include identification information of the application server and/or identification information of the terminal device. The identification information of the terminal device may be an external identifier of the terminal device, a permanent equipment identifier, or the like. Optionally, the monitoring request may further include identification information of an application. Optionally, the monitoring request may further include NEF-related information, for example, an NEF reference identifier. Optionally, the monitoring request may further include a monitoring event type. In this application, the monitoring event type is a type of an event of monitoring the connected mode of the terminal device.

S 104: After receiving the monitoring request sent by the NEF network element, the UDM network element may perform UDM processing.

The UDM processing may include but is not limited to: checking, by the UDM network element according to the policy of the operator, whether a parameter in the monitoring request is valid; and determining, based on the identification information of the terminal device, an AMF corresponding to the terminal device. In addition, the UDM processing may further include determining, by the UDM network element, an intra-network identifier, for example, a subscription permanent identifier (Subscriber Permanent Identifier, SUPI), of the terminal device based on the external identifier of the terminal device.

S105: The UDM network element sends a message to the AMF network element. The message may include first time information and/or second time information. Herein, the message may be used to indicate the terminal device to request a RAN to set the connected mode of the terminal device based on the first time information and/or the second time information. In only an example, the message may be an insert subscription data message.

Optionally, the message may further include identification information of the application server and/or identification information of the terminal device. The identification information of the terminal device may be an external identifier of the terminal device, a permanent equipment identifier, or the like. Optionally, the message may further include identification information of an application. Optionally, the message may further include NEF-related information, for example, an NEF reference identifier. Optionally, the message may further include a monitoring event type. In this application, the monitoring event type is a type of an event of monitoring the connected mode of the terminal device.

S106: The AMF network element sends a request message to the access network device, to request to set the connected mode of the terminal device.

Specifically, the request message may be an RRC inactive ancillary information request message. The request message may include first time information and/or second time information. Optionally, the request message may further include identification information of the application server and/or identification information of the terminal device. The identification information of the terminal device may be an external identifier of the terminal device, a permanent equipment identifier, or the like. Optionally, the request message may further include identification information of an application. Optionally, the request message may further include a monitoring event type. In this application, the monitoring event type is a type of an event of monitoring the connected mode of the terminal device.

It needs to be understood that, in FIG. 2, the monitoring request sent by the application server to the NEF network element and the monitoring request sent by the NEF network element to the UDM network element are different signaling, and are different in signaling implementation. Herein, the monitoring request is merely a message name. This is not limited in this application, provided that functions are the same. It is also applicable to a monitoring request mentioned in the following embodiments, and a message name is not limited.

It may be learned from FIG. 2 that, in Embodiment 1, the series of request messages corresponding to the request message from the application server may include the monitoring request sent in S101, the monitoring request sent in S 103, the message sent in S 105, and the request message sent in S 106. Not limited to S101 to S 106, the series of request messages corresponding to the request message from the application server may alternatively be implemented as other signaling. This is not limited in this application.

S 107: After receiving a request sent by the AMF network element, the access network device may set the connected mode of the terminal device based on the first time information and/or the second time information. Specifically, the access network device may set, based on the first time information, duration for which the terminal device is in an RRC connected state, and/or the access network device may set, based on the second time information, duration for which the terminal device is in an RRC inactive state.

Optionally, when the request message received by the access network device includes the identification information of the application, the connected mode of the terminal device may be specifically a connected mode that is of the terminal device and that corresponds to the application indicated by the identification information of the application. In this way, the connected mode of the terminal device can be set for a specific application, thereby better supporting service requirements of a third-party service provider.

For example, assuming that the first time information indicates that a maximum response time is 10 ms, the access network device may set the duration for which the terminal device is in the RRC connected state to be greater than or equal to 10 ms. In this way, reachability of the terminal device can be ensured, so that the application server continuously transmits an application data packet to the terminal device.

For another example, assuming that the second time information indicates that a maximum delay time is 5 ms, the access network device may set the duration for which the terminal device is in the RRC inactive state to be less than or equal to 5 ms. In this way, it can be ensured that the terminal device is reachable in time, so that the application server continuously transmits an application data packet to the terminal device. Optionally, the access network device may set a periodic RAN notification area update timer (periodic RAN Notification Area Update timer) based on the maximum delay time, to set the duration for which the terminal device is in the RRC inactive state.

S108 and S109: After the access network device completes setting of the duration for which the terminal device is in the RRC connected state and/or the RRC inactive state, the AMF network element may return a monitoring indication to the application server through the NEF network element. The monitoring indication may include the connected mode, an access type, and the like of the terminal device.

Optionally, the AMF may determine, based on the identification information of the application, an access technology corresponding to the third-party application. If the access technology is not a 3GPP access technology, the setting fails. In this case, the monitoring indication is a setting failure message. A manner of determining an access technology corresponding to a third-party application is not limited in this application. Optionally, the AMF may determine whether the access network device is a 3GPP access network device. If the access network device is not a 3GPP access network device, the setting fails. In this case, the monitoring indication is a setting failure message.

### Related extension 1 of Embodiment 1

Optionally, the monitoring request sent in S101 may not include the first time information and/or the second time information, but may include third time information and/or fourth time information. The third time information may be used to determine the first time information, and the fourth time information may be used to determine the second time information.

For example, the third time information may indicate that the maximum response time requested by the application server is 10 ms. A core network device (for example, the NEF network element, the UDM network element, or the AMF network element) may determine, based on 10 ms, that the first time information indicates duration greater than or equal to 10 ms, for example, 15 ms, to ensure that the terminal device can be always in a reachable state when the application server transmits the application data packet to the terminal device, thereby implementing continuous data transmission.

For another example, the fourth time information may indicate that the maximum delay time requested by the application server is 5 ms. A core network device (for example, the NEF network element, the UDM network element, or the AMF network element) may determine, based on 5 ms, that the first time information indicates duration greater than or equal to 5 ms, for example, 4 ms, to ensure that the terminal device can be in a reachable state in time when the application server transmits the application data packet to the terminal device, thereby implementing effective data transmission.

### Related extension 2 of Embodiment 1

Specifically, the terminal device may be in the MICO mode. The first time information may be used to set a time for which the terminal device is in the connected mode in the MICO mode. The second time information may be used to set a time for which the terminal device initiates uplink signaling or data in an idle mode in the MICO mode.

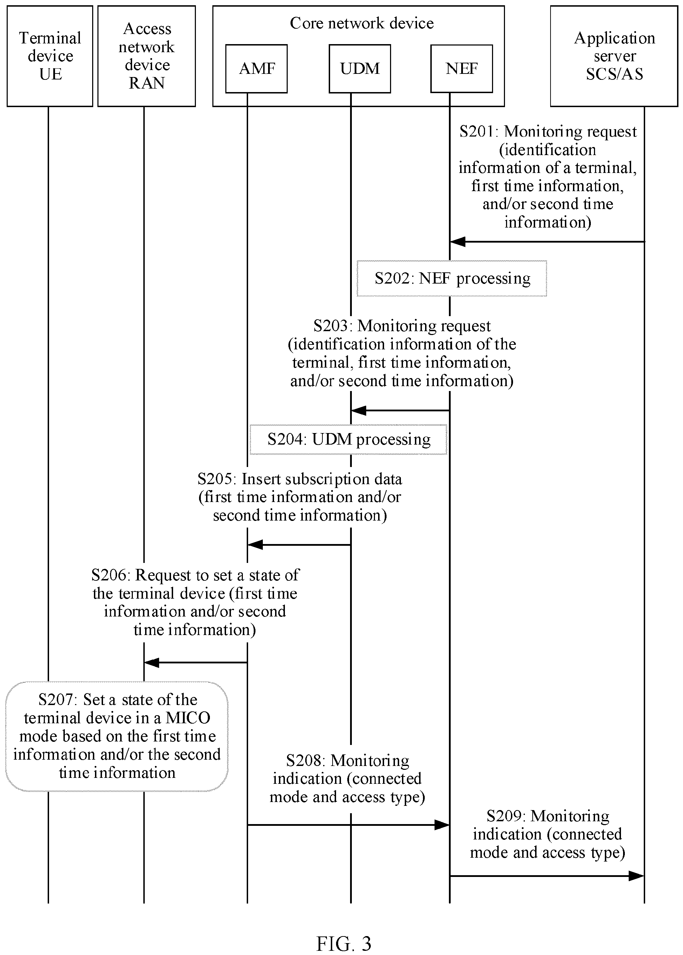

As shown in S207 in FIG. 3, for the terminal device in the MICO mode, after receiving the request sent by the AMF network element, the access network device may set a state of the terminal device in the MICO mode based on the first time information and/or the second time information. Specifically, the access network device may set, based on the first time information, the time for which the terminal device is in the connected mode in the MICO mode, and/or the access network device may set, based on the second time information, the time for which the terminal device initiates the uplink signaling or the data in the idle mode in the MICO mode.

In other words, network capabilities exposed by a mobile communications operator may alternatively include setting the state of the terminal device in the MICO mode. Through exposure of the network capabilities, a third-party service provider may request a network side to set the state of the terminal device in the MICO mode. The network side may respond to the request of the third-party service provider, and correspondingly set the state of the terminal device in the MICO mode, so that the third-party service provider can transmit a downlink data packet to the terminal device.

For S201 to S206 in FIG. 3, refer to S101 to S106 in FIG. 2. For S208 and S209 in FIG. 3, refer to S108 and S 109 in FIG. 2. Details are not described herein again.

In some optional embodiments, Embodiment 1 and the related extensions of Embodiment 1 may be combined. Specifically, after receiving the request sent by the AMF network element, the access network device may determine whether the terminal device is in the MICO mode. If the terminal device is in the MICO mode, the capability exposure method provided in the embodiment in FIG. 3 is used; otherwise, the capability exposure method provided in the embodiment in FIG. 2 is used.

### (2) Embodiment 2

In Embodiment 1, the AMF network element receives a request message from the application server. Different from Embodiment 1, in this embodiment, the access network device receives the request message from the application server through the terminal device.

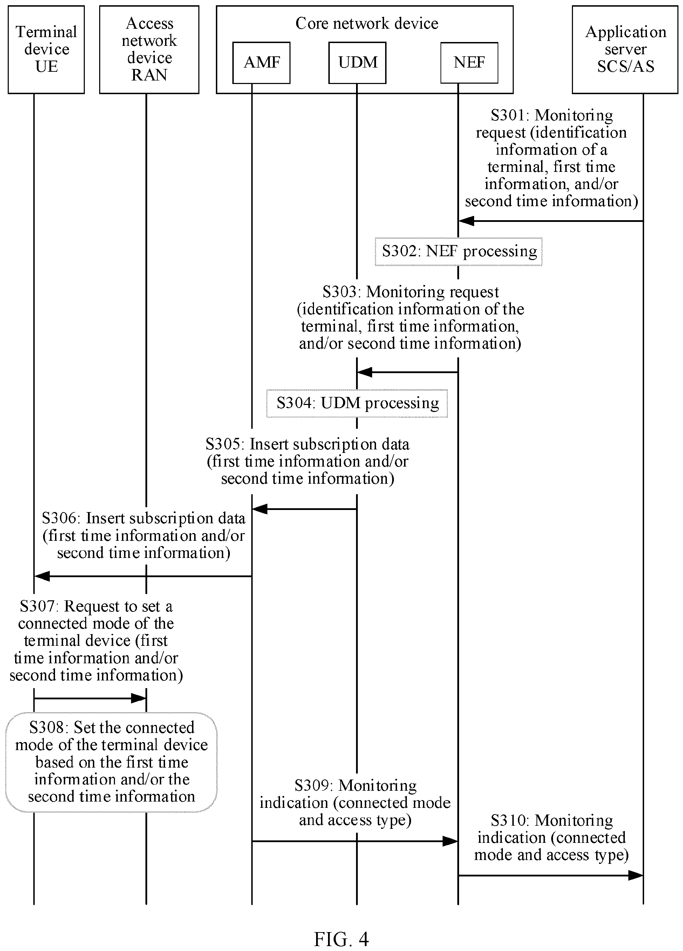

As shown in FIG. 4, a process in which the access network device obtains the request message from the application server may include the following two phases.
(1) Phase 1: The terminal device receives the request message from the application server. The following steps are specifically included.

S301: The application server sends a monitoring request to the NEF network element. The monitoring request may include first time information and/or second time information. Optionally, the monitoring request may further include identification information of the application server and/or identification information of the terminal device. The identification information of the terminal device may be an external identifier of the terminal device, a permanent equipment identifier, or the like. Optionally, the monitoring request may further include identification information of an application. The identification information of the application is used to identify a third-party application that initiates a monitoring request process. Optionally, the monitoring request may further include a monitoring event type. In this application, the monitoring event type is a type of an event of monitoring a connected mode of the terminal device.

S302: After receiving the monitoring request sent by the application server, the NEF network element may perform NEF processing.

The NEF processing may include but is not limited to the following process.

Optionally, the NEF network element may store the identification information of the application. Optionally, the NEF network element may not store the identification information of the application, but obtains the information from the application server when the NEF network element needs the information. A specific implementation process in which the NEF network element obtains the identification information of the application from the application server is not limited in this application.

Optionally, the NEF network element may allocate an NEF reference identifier.

Optionally, the NEF network element may determine, according to a policy of an operator, whether the monitoring request sent by the application server is valid. If the monitoring request is invalid, the NEF network element sends a response message to an SCS/AS. The response message may include information such as a rejection reason.

S303: The NEF network element sends a monitoring request to the UDM network element. The monitoring request may include first time information and/or second time information. Optionally, the monitoring request may further include identification information of the application server and/or identification information of the terminal device. The identification information of the terminal device may be an external identifier of the terminal device, a permanent equipment identifier, or the like. Optionally, the monitoring request may further include identification information of an application. Optionally, the monitoring request may further include NEF-related information, for example, an NEF reference identifier. Optionally, the monitoring request may further include a monitoring event type. In this application, the monitoring event type is a type of an event of monitoring the connected mode of the terminal device.

Optionally, the NEF network element alternatively sends a message to a PCF network element. The message may include first time information and/or second time information, and may further include identification information of the terminal device, identification information of a server, and/or the like. After receiving the first time information and/or the second time information, the PCF may send the information to the terminal device as user routing selection policy (user routing selection policy, URSP) information. A process of sending the URSP information to the terminal device is the same as that in the prior art. Details are not described herein again.

S304: After receiving the monitoring request sent by the NEF network element, the UDM network element may perform UDM processing.

The UDM processing may include but is not limited to: checking, by the UDM network element according to the policy of the operator, whether a parameter in the monitoring request is valid; and determining, based on the identification information of the terminal device, an AMF corresponding to the terminal device. In addition, the UDM processing may further include determining, by the UDM network element, an intra-network identifier, for example, a subscription permanent identifier, of the terminal device based on the external identifier of the terminal device.

S305: The UDM network element sends a message to the AMF network element. The message may include first time information and/or second time information. Herein, the message may be used to indicate the terminal device to request the RAN to set the connected mode of the terminal device based on the first time information and/or the second time information. In only an example, the message may be an insert subscription data message.

Optionally, the message may further include identification information of the application server and/or identification information of the terminal device. The identification information of the terminal device may be an external identifier of the terminal device, a permanent equipment identifier, or the like. Optionally, the message may further include identification information of an application. Optionally, the message may further include NEF-related information, for example, an NEF reference identifier. Optionally, the message may further include a monitoring event type. In this application, the monitoring event type is a type of an event of monitoring the connected mode of the terminal device.

S306: The AMF network element sends a message to the terminal device. The message may include first time information and/or second time information. Herein, the message may be used to indicate the terminal device to request the RAN to set the connected mode of the terminal device based on the first time information and/or the second time information. In only an example, the message may be an insert subscription data message.

Optionally, the AMF may determine, based on the identification information of the application, an access technology corresponding to the third-party application. If the access technology is a 3GPP access technology, the AMF network element notifies the terminal device of the first time information and/or the second time information. A manner of determining an access technology corresponding to a third-party application is not limited in this application.

It needs to be understood that the message in S306 and the message in S305 are different messages, and are different in signaling implementation.

(2) Phase 2: The terminal device requests the access network device to set the connected mode of the terminal device. The following steps are specifically included.

S307: The terminal device sends a request message to the access network device, to request the access network device to set the connected mode of the terminal device. The request message may include first time information and/or second time information. Optionally, the message may further include identification information of an application. Optionally, the message may further include a monitoring event type. In this application, the monitoring event type is a type of an event of monitoring the connected mode of the terminal device.

S308: The access network device may set, based on the first time information, duration for which the terminal device is in an RRC connected state, and/or the access network device may set, based on the second time information, duration for which the terminal device is in an RRC inactive state.

For example, assuming that the first time information indicates that a maximum response time is 10 ms, the access network device may set the duration for which the terminal device is in the RRC connected state to be greater than or equal to 10 ms. In this way, reachability of the terminal device can be ensured, so that the application server continuously transmits an application data packet to the terminal device.

For another example, assuming that the second time information indicates that a maximum delay time is 5 ms, the access network device may set the duration for which the terminal device is in the RRC inactive state to be less than or equal to 5 ms. In this way, it can be ensured that the terminal device is reachable in time, so that the application server continuously transmits an application data packet to the terminal device. Optionally, the access network device may set a periodic RAN notification area update timer based on the maximum delay time, to set the duration for which the terminal device is in the RRC inactive state.

It may be learned from FIG. 4 that, in Embodiment 2, a series of request messages corresponding to the request message from the application server may include the monitoring request sent in S301, the monitoring request sent in S303, the message sent in S305, the message sent in S306, and the request message sent in S307. Not limited to S301 to S307, the series of request messages corresponding to the request message from the application server may alternatively be implemented as other signaling. This is not limited in this application.

Embodiment 2 may also have the same extensions as Embodiment 1. For details, refer to related extension 1 in Embodiment 1 and related extension 2 in Embodiment 1. Details are not described herein again.

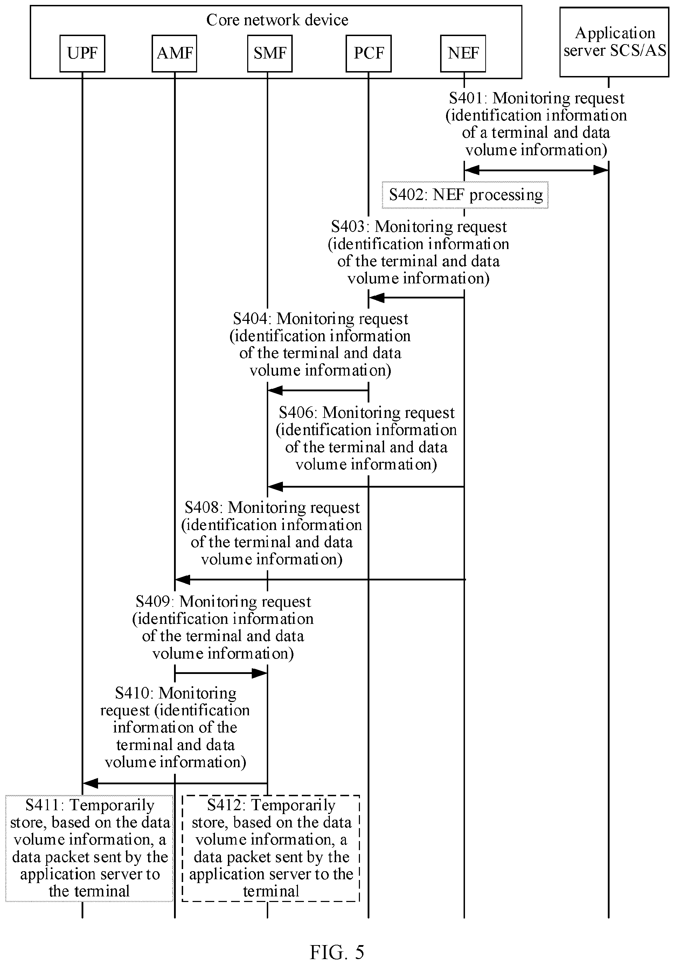

In addition, this application further provides a capability exposure method, to temporarily store an application data packet, especially when a terminal device is unreachable. As shown in FIG. 5, the method may include the following steps.

S401 to S410: A core network device obtains a request message from an application server. The request message may include identification information of a terminal device and data volume information.

S411 or S412: The core network device temporarily stores, based on the data volume information, a data packet sent by the application server to the terminal device.

Herein, the request message from the application server refers to a series of request messages that are initiated by the application server, pass through a plurality of core network elements, and finally arrive at a core network element configured to temporarily store an application data packet. The series of request messages are jointly used to request to temporarily store the application data packet.

In this application, the core network element configured to temporarily store the application data packet may include a UPF network element corresponding to a data network transmission access point identifier (Data Network Access Identifier, DNAI) of the application server, a UPF network element corresponding to a data network name (Data Network Name, DNN) of a local area data network (Local Area Data Network, LADN) corresponding to the application server, or an SMF network element corresponding to the terminal device.

Optionally, as shown in S411, the UPF network element may temporarily store, based on the data volume information, the data packet sent by the application server to the terminal device. Optionally, as shown in S412, the SMF corresponding to the terminal device may temporarily store, based on the data volume information, the data packet sent by the application server to the terminal device.

As shown in FIG. 5, a process in which the core network device obtains the request message from the application server may include the following steps.

S401: The application server sends a monitoring request to an NEF network element. The monitoring request may include identification information of the terminal device and data volume information. The identification information of the terminal device may be an external identifier of the terminal device, a permanent equipment identifier, IP address information of the terminal device, or the like.

Optionally, the monitoring request may further include identification information of an application. The identification information of the application is used to identify a third-party application that initiates a monitoring request process. Optionally, the UPF network element or the SMF network element may detect a type of an application data packet; determine whether the application data packet is a data packet corresponding to the identification information of the application; and temporarily store the application data packet if the application data packet is the data packet corresponding to the identification information of the application. In this way, a third-party service provider may request the core network device to temporarily store the application data packet from a specified third-party application, so that the core network device can differentially process application data packets from different third-party applications, and temporarily store only an application data packet from a third-party application indicated by the identification information of the application, thereby better supporting different service requirements of the third-party service provider.

S402: After receiving the monitoring request sent by the application server, the NEF network element may perform NEF processing.

Optionally, the NEF network element may determine a data network access point identifier corresponding to the application server. The DNAI is a transmission access point of the application data packet. Specifically, the DNAI may be an identifier of the UPF. A method for determining the DNAI is not limited in this patent. For example, the NEF network element requests the DNAI from an SM network element to which a PDU session of an application data flow identified by the application identifier belongs.

Optionally, the NEF network element may determine, based on the identification information of the application, a DNN to which the application server belongs. A specific manner of determining the DNN is not limited in this application. For example, the DNN may be determined in, but not limited to, the following several manners.
A. The NEF network element requests a correspondence between the application server and the DNN from the core network device (for example, the SMF network element, a PCF network element, or an OSS network management device).
B. The core network device (for example, the SMF network element, the PCF network element, or the OSS network management device) sends the correspondence between the application server and the DNN to the NEF network element.

Optionally, the NEF network element may determine, based on information such as an IP address of the terminal device, a PCF in which the terminal device is located.

S403 to S410: The core network element configured to temporarily store the application data packet obtains the request message from the NEF network element.

As shown in FIG. 5, the core network element configured to temporarily store the application data packet may obtain the request message from the NEF network element in, but not limited to, the following several manners.

### Manner 1:

S403: The NEF network element sends a monitoring request to the PCF network element. The monitoring request may include identification information of the terminal device and data volume information. Optionally, the monitoring request may further include a DNAI of the application server, or a DNN of an LADN corresponding to the application server. Optionally, the monitoring request may further include identification information of an application.

S404: The PCF network element may determine, based on the identification information of the terminal device, the SMF network element corresponding to the terminal device, and send a monitoring request to the SMF network element. The monitoring request may include identification information of the terminal device and data volume information. Optionally, the monitoring request may further include a DNAI of the application server, or a DNN of an LADN corresponding to the application server. Optionally, the monitoring request may further include identification information of an application.

S410: The SMF network element may determine the corresponding UPF network element based on the DNAI of the application server, or determine the corresponding UPF network element based on the DNN of the LADN corresponding to the application server. Then, the SMF network element may send a monitoring request to the corresponding UPF network element. The monitoring request may include identification information of the terminal device and data volume information.

### Manner 2:

S406: The NEF network element may determine, based on the identification information of the terminal device, the SMF network element corresponding to the terminal device, and send a monitoring request to the SMF network element. The monitoring request may include identification information of the terminal device and data volume information. Optionally, the monitoring request may further include a DNAI of the application server, or a DNN of an LADN corresponding to the application server. Optionally, the monitoring request may further include identification information of an application.

S410: The SMF network element may determine the corresponding UPF network element based on the DNAI of the application server, or determine the corresponding UPF network element based on the DNN of the LADN corresponding to the application server. Then, the SMF network element may send a monitoring request to the corresponding UPF network element. The monitoring request may include identification information of the terminal device and data volume information.

### Manner 3:

S408: The NEF network element may send a monitoring request to an AMF network element. The monitoring request may include identification information of the terminal device and data volume information. Optionally, the monitoring request may further include a DNAI of the application server, or a DNN of an LADN corresponding to the application server. Optionally, the monitoring request may further include identification information of an application.

It needs to be noted that the sending, by the NEF network element, the monitoring request to the AMF network element is not limited to directly sending, by the NEF network element, a monitoring request to the AMF network element, and may be sending, by the NEF network element, a monitoring request to the AMF network element through another network device. For example, the NEF network element sends a monitoring request to a UDM network element. Then, the UDM network element determines the corresponding AMF network element based on the identification information of the terminal device, and sends the monitoring request to the corresponding AMF network element. Alternatively, after determining the corresponding AMF network element, a UDM network element sends identification information of the AMF to the NEF. Then, the NEF network element sends a monitoring request to the AMF network element based on the identification information of the AMF network element. The example is merely used to explain this application and shall not constitute a limitation.

S409: The AMF network element may determine, based on the identification information of the terminal device, the SMF network element corresponding to the terminal device, and send a monitoring request to the SMF network element. The monitoring request may include identification information of the terminal device and data volume information. Optionally, the monitoring request may further include a DNAI of the application server, or a DNN of an LADN corresponding to the application server. Optionally, the monitoring request may further include identification information of an application.

S410: The SMF network element may determine the corresponding UPF network element based on the DNAI of the application server, or determine the corresponding UPF network element based on the DNN of the LADN corresponding to the application server. Then, the SMF network element may send a monitoring request to the corresponding UPF network element. The monitoring request may include identification information of the terminal device and data volume information.

In addition to the foregoing three manners, the core network device may further obtain the request message from the network exposure function (NEF) by using another signaling procedure.

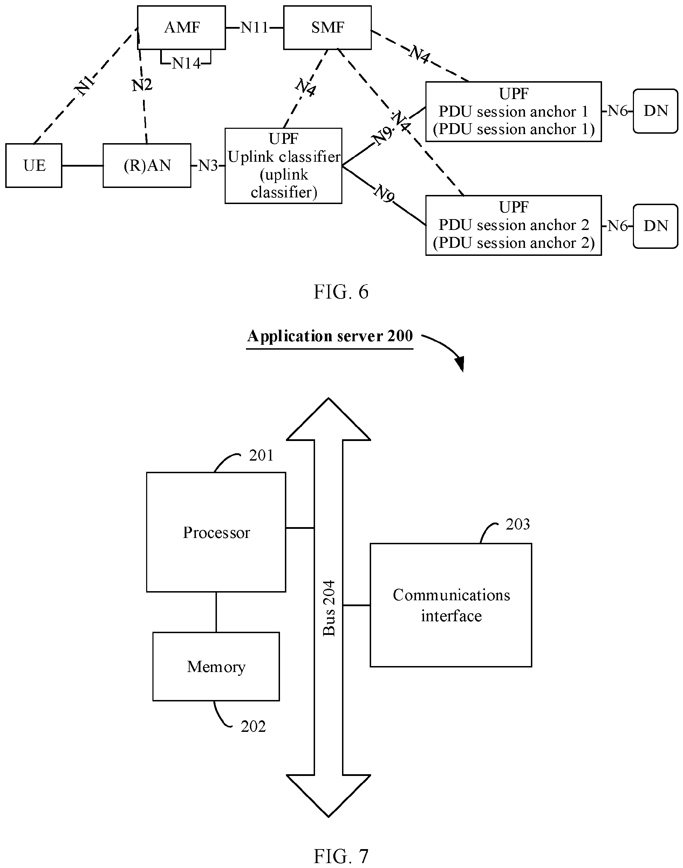

In some optional embodiments, the UPF network element may be an uplink classifier (uplink classifier, UL CL) network element in FIG. 6. In a network architecture of the UL CL shown in FIG. 6, the DNAI may be an identifier of a PDU session anchor 1 (PDU session anchor 1) or an identifier of a PDU session anchor 2 (PDU session anchor 2) in FIG. 6, or an identifier of a UPF network element having a UL CL function.

FIG. 7 shows an application server 200 provided in some embodiments of this application. As shown in FIG. 7, the application server 200 may include one or more processors 201, a memory 202, and a communications interface 203. These components may be connected via a bus 204 or in another manner. In FIG. 7, an example in which the components are connected via a bus is used.

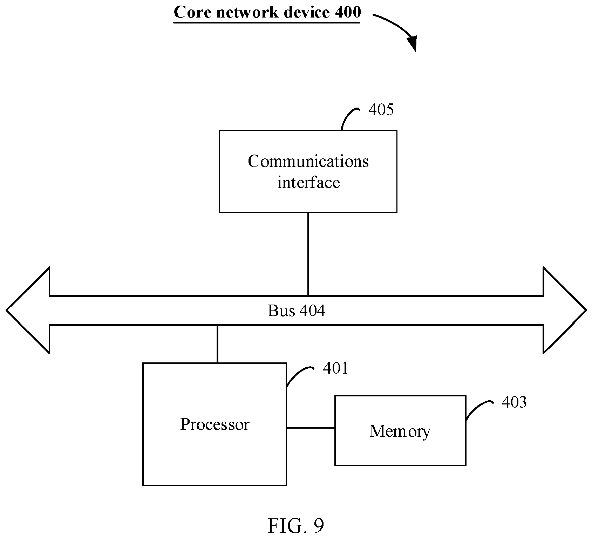

The communications interface 203 may be configured for communication between the application server 200 and another communications device, for example, a core network device. Specifically, the core network device may be a core network device 400 shown in FIG. 9. Specifically, the communications interface 203 may include a wired communications interface such as a wide area network (Wide Area Network, WAN) interface or a local access network (Local Access Network, LAN) interface. Not limited to the wired communications interface, in some possible embodiments, the communications interface 203 may further include a wireless communications interface such as a wireless local area network (Wireless Local Area Networks, WLAN) interface.

The memory 202 is coupled to the processor 201, and is configured to store various software programs and/or a plurality of sets of instructions. Specifically, the memory 202 may include a high-speed random access memory, and may further include a non-volatile memory, for example, one or more disk storage devices, a flash memory device, or another non-volatile solid-state storage device. The memory 202 may store an operating system (which is briefly referred to as a system below), for example, an embedded operating system such as uCOS, VxWorks, or RTLinux. The memory 202 may further store a network communications program. The network communications program may be used to communicate with one or more additional devices, one or more terminal devices, or one or more network devices.

In some embodiments of this application, the memory 202 may be configured to store a program for implementing, on an application server 200 side, the capability exposure method provided in one or more embodiments of this application. For implementation of the capability exposure method provided in one or more embodiments of this application, refer to the following embodiments.

The processor 201 may be configured to read and execute a computer-readable instruction. Specifically, the processor 201 may be configured to: invoke a program stored in the memory 212, for example, the program for implementing, on the application server 200 side, the capability exposure method provided in one or more embodiments of this application; and execute an instruction included in the program.

It may be understood that the application server 200 may be the service capability server/application server 10 in the communications system 100 shown in FIG. 1. The application server 200 shown in FIG. 7 is merely an implementation of the embodiments of this application. During actual application, the application server 200 may further include more or fewer components. This is not limited herein.

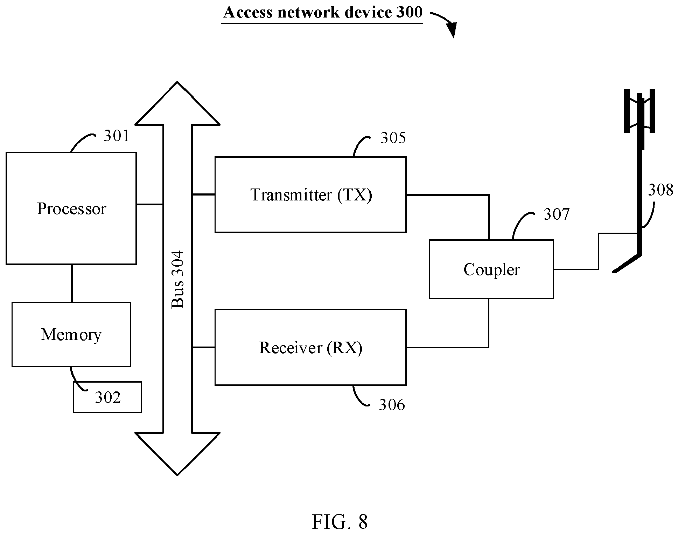

FIG. 8 shows an access network device 300 provided in some embodiments of this application. As shown in FIG. 8, the access network device 300 may include one or more processors 301, a memory 302, a communications interface 303, a transmitter 305, a receiver 306, a coupler 307, and an antenna 308. These components may be connected via a bus 304 or in another manner. In FIG. 8, an example in which the components are connected via a bus is used.

The transmitter 305 may be configured to perform transmission processing, for example, signal modulation, on a signal that is output by the processor 301. The receiver 306 may be configured to perform receiving process, for example, signal demodulation, on a signal that is received by the antenna 308. In some embodiments of this application, the transmitter 305 and the receiver 306 may be considered as a wireless modem. The access network device 300 may include one or more transmitters 305 and one or more receivers 306.

The antenna 308 may be configured to convert electromagnetic energy in a transmission line into an electromagnetic wave in free space, or convert an electromagnetic wave in free space into electromagnetic energy in a transmission line. The coupler 307 may be configured to: divide a mobile communications signal into a plurality of signals, and distribute the plurality of signals to a plurality of receivers 306.

The memory 302 is coupled to the processor 301, and is configured to store various software programs and/or a plurality of sets of instructions. Specifically, the memory 302 may include a high-speed random access memory, and may further include a non-volatile memory, for example, one or more disk storage devices, a flash memory device, or another non-volatile solid-state storage device. The memory 302 may store an operating system (which is briefly referred to as a system below), for example, an embedded operating system such as uCOS, VxWorks, or RTLinux. The memory 302 may further store a network communications program. The network communications program may be used to communicate with one or more additional devices, one or more terminal devices, or one or more network devices.

The processor 301 may be configured to: perform radio channel management, calling implementation, and communications link establishment and disconnecting; and provide cell handover control and the like for a user in a local control area. Specifically, the processor 301 may include an administration/communication module (Administration Module/Communication Module, AM/CM) (a center for speech channel switching and information exchange), a basic module (Basic Module, BM) (configured to implement call processing, signaling processing, radio resource management, radio link management, and circuit maintenance functions), a transcoder and submultiplexer (Transcoder and SubMultiplexer, TCSM) (configured to implement multiplexing/demultiplexing and transcoding functions), and the like.

In this embodiment of this application, the processor 301 may be configured to read and execute a computer-readable instruction. Specifically, the processor 301 may be configured to: invoke a program stored in the memory 302, for example, the program for implementing, on an access network device 300 side, the capability exposure method provided in one or more embodiments of this application; and execute an instruction included in the program.

It may be understood that the access network device 300 may be the access network device ((R)AN) 13 in the communications system 100 shown in FIG. 1, and may be implemented as a base transceiver station, a wireless transceiver, a basic service set (BSS), an extended service set (ESS), a NodeB, an eNodeB, an access point, a TRP, or the like. The access network device 300 shown in FIG. 8 is merely an implementation of the embodiments of this application. During actual application, the access network device 300 may further include more or fewer components. This is not limited herein.

FIG. 9 shows a core network device 400 provided in some embodiments of this application. As shown in FIG. 9, the core network device 400 may include one or more processors 401, a memory 403, and a communications interface 405. These components may be connected via a bus 404 or in another manner. In FIG. 9, an example in which the components are connected via a bus is used.

The communications interface 405 may be configured for communication between the core network device 400 and another communications device, for example, an access network device or an application server. Specifically, the application server may be the application server 200 shown in FIG. 7, and the access network device may be the access network device 300 shown in FIG. 8. Specifically, the communications interface 405 may include a wired communications interface such as a wide area network (WAN) interface or a local access network (LAN) interface. Not limited to the wired communications interface, in some possible embodiments, the communications interface 405 may further include a wireless communications interface such as a wireless local area network (WLAN) interface.

The memory 403 is coupled to the processor 401, and is configured to store various software programs and/or a plurality of sets of instructions. Specifically, the memory 403 may include a high-speed random access memory, and may further include a non-volatile memory, for example, one or more disk storage devices, a flash memory device, or another non-volatile solid-state storage device. The memory 403 may store an operating system (which is briefly referred to as a system below), for example, an embedded operating system such as uCOS, VxWorks, or RTLinux. The memory 403 may further store a network communications program. The network communications program may be used to communicate with one or more additional devices, one or more terminal devices, or one or more network devices.

In some embodiments of this application, the memory 403 may be configured to store a program for implementing, on a core network device 400 side, the capability exposure method provided in one or more embodiments of this application. For implementation of the capability exposure method provided in one or more embodiments of this application, refer to the following embodiments.

The processor 401 may be configured to read and execute a computer-readable instruction. Specifically, the processor 401 may be configured to: invoke a program stored in the memory 405, for example, the program for implementing, on the core network device 400 side, the capability exposure method provided in one or more embodiments of this application; and execute an instruction included in the program.

It may be understood that the core network device 400 may be the core network device in the communications system 100 shown in FIG. 1, and may be implemented as the NEF 11, the AMF 19, the SMF 18, the PCF 17, the UDM 20, the UPF 14, or the like. The core network device 400 shown in FIG. 9 is merely an implementation of the embodiments of this application. During actual application, the core network device 400 may further include more or fewer components. This is not limited herein.

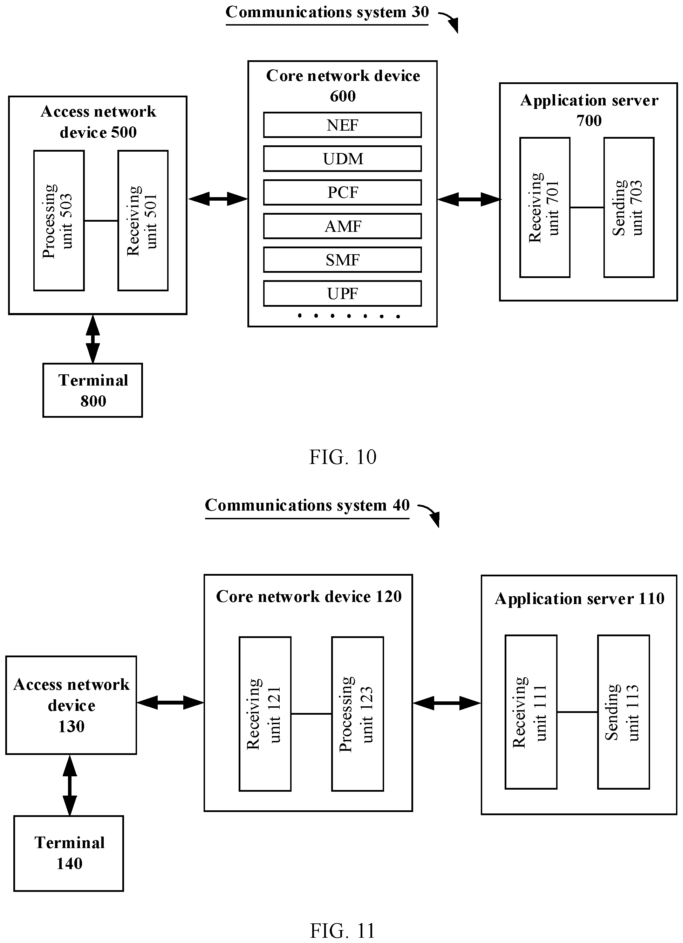

FIG. 10 shows a communications system and a communications apparatus provided in this application. The communications system 30 may include the following communications apparatuses: an application server 700, a core network device 600, an access network device 500, and a terminal device 800. The communications system 30 and the communications apparatuses in the communications system 30 may implement each capability exposure method described in the embodiments corresponding to FIG. 2 to FIG. 4. In other words, network capabilities exposed by a mobile communications network in which the core network device 600 (including but not limited to the following functions: a NEF, UDM, a PCF, an AMF, an SMF, a UPF, and the like) and the access network device 500 are located may include: setting duration for which a terminal device is in an RRC inactive state; and/or setting a state of a terminal device in a MICO mode. Details are described below.

As shown in FIG. 10, the application server 700 may include a receiving unit 701 and a sending unit 703.

The receiving unit 701 may be configured to send a request message to the access network device 500. The request message includes first time information and/or second time information.

The sending unit 703 may be configured to receive a response message of the request message from the access network device 500.

In this application, the first time information may alternatively be information used to set transmission duration of a data packet, for example, information about a maximum response time. The second time information may alternatively be information used to set a transmission delay of the data packet, for example, information about a maximum delay time.

In some embodiments, the first time information may be used to set a time for which the terminal device 800 is in a first state of a connected mode. The second time information may be used to set a time for which the terminal device 800 is in a second state of the connected mode. In this application, the first state of the connected mode may include but is not limited to an active state, for example, an RRC connected state. The second state of the connected mode may include but is not limited to an inactive state, for example, the RRC inactive state.

In some embodiments, the first time information may be used to set a time for which the terminal device 800 is in the connected mode in the mobile initiated connection only MICO mode. The second time information may be used to set a time for which the terminal device 800 initiates uplink signaling or data in an idle mode in the MICO mode.

In some embodiments, the request message may further include identification information of an application. The connected mode may be specifically a connected mode that is of the terminal device 800 and that of corresponds to the application.

In some embodiments, the request message may further include identification information of the terminal device 800 and/or identification information of the application server.

It may be understood that, for specific implementation of functional units of the application server 700, refer to each method embodiment corresponding to FIG. 2 and FIG. 4. Details are not described herein again.

As shown in FIG. 10, the access network device 500 may include a receiving unit 501 and a processing unit 503.

The receiving unit 501 is configured to obtain a request message from the application server 700. The request message includes first time information and/or second time information.

The processing unit 503 is configured to set a connected mode of the terminal device 800 based on the first time information and/or the second time information.

Herein, the request message from the application server 700 refers to a series of request messages that are initiated by the application server 700, pass through the core network device 600, and finally arrive at the access network device. The series of request messages are jointly used to request the access network device to set the connected mode of the terminal device 800. Herein, core network elements through which the request message passes may specifically include but are not limited to an NEF, UDM, and an AMF. Specifically, the receiving unit 501 may be specifically configured to: receive the request message from the application server 700 through an access management (AMF) network element; or receive the request message from the application server 700 through the terminal device 800. For details, refer to the embodiment in FIG. 5 or FIG. 4. Details are not described herein again.

In this application, the first time information may alternatively be information used to set transmission duration of a data packet, for example, information about a maximum response time. The second time information may alternatively be information used to set a transmission delay of the data packet, for example, information about a maximum delay time.

In some embodiments, the first time information may be used to set a time for which the terminal device 800 is in a first state of the connected mode. The second time information may be used to set a time for which the terminal device 800 is in a second state of the connected mode. In this application, the first state of the connected mode may include but is not limited to an active state, for example, an RRC connected state. The second state of the connected mode may include but is not limited to an inactive state, for example, the RRC inactive state. Correspondingly, the processing unit 503 may be specifically configured to: set, based on the first time information, the time for which the terminal device 800 is in the first state of the connected mode; and/or set, based on the second time information, the time for which the terminal device 800 is in the second state of the connected mode.

In some embodiments, the first time information may be used to set a time for which the terminal device 800 is in the connected mode in the mobile initiated connection only MICO mode. The second time information may be used to set a time for which the terminal device 800 initiates uplink signaling or data in an idle mode in the MICO mode. Correspondingly, the processing unit 503 may be specifically configured to: set, based on the first time information, the time for which the terminal device 800 is in the connected mode in the mobile initiated connection only MICO mode; and/or set, based on the second time information, the time for which the terminal device 800 initiates the uplink signaling or the data in the idle mode in the MICO mode.

In some embodiments, the request message may further include identification information of an application. The connected mode may be specifically a connected mode that is of the terminal device 800 and that of corresponds to the application.

In some embodiments, the request message may further include identification information of the terminal device 800 and/or identification information of the application server 700.

It may be understood that, for specific implementation of functional units of the access network device 500, refer to each method embodiment corresponding to FIG. 2 and FIG. 4. Details are not described herein again.

It may be learned that, by implementing the communications system 30 and the communications apparatuses in the communications system 30 shown in FIG. 10, network capabilities exposed by a mobile communications operator may include: setting the duration for which the terminal device is in the RRC inactive state; and/or setting the state of the terminal device in the MICO mode. Through exposure of the network capabilities, a third-party service provider may request a network side to set the duration for which the terminal device is in the RRC inactive state, and/or set the state of the terminal device in the MICO mode, so that the third-party service provider can transmit a downlink data packet to the terminal device.

It needs to be understood that the communications system 30 shown in FIG. 10 may be implemented as the communications system 100 shown in FIG. 1. The application server 700 may be the SCS/AS 100. The core network device 600 may include the network exposure function (NEF) network element 11, the access and mobility management function (AMF) network element 19, the session management function (SMF) network element 18, the user plane function (UPF) network element 14, the data network (DN) 15, the application function (AF) network element 16, the policy control function (PCF) network element 17, the unified data management (UDM) network element 20, the authentication server function (AUSF) network element 21, and the like. The access network device 500 may be the (R)AN 13. The terminal device 800 may be UE 12.

FIG. 11 shows another communications system and another communications apparatus provided in this application. The communications system 40 may include the following communications apparatuses: an application server 110, a core network device 120, an access network device 130, and a terminal device 140. The communications system 40 and the communications apparatuses in the communications system 40 may implement the capability exposure method described in the embodiment in FIG. 5. Details are described below.

As shown in FIG. 11, the application server 110 may include a sending unit 111 and a receiving unit 113.

The sending unit 111 may be configured to send a request message to the core network device 120. The request message includes identification information of a terminal device and data volume information.

The receiving unit 113 may be configured to receive a response message of the request message from the core network device 120.

In some embodiments, the request message may further include identification information of an application. The data volume information may be specifically data volume information that is to be temporarily stored and that corresponds to the application.

In some embodiments, the core network device 120 may be a user plane function UPF network element corresponding to a data packet transmission access point identifier of the application server, a UPF corresponding to a data network name of a local area data network LADN corresponding to the application server, or a session management SMF network element corresponding to the terminal device.

It may be understood that, for specific implementation of functional units of the application server 110, refer to the embodiment in FIG. 8. Details are not described herein again.

As shown in FIG. 11, the core network device 120 may include a receiving unit 121 and a processing unit 123.

The receiving unit 121 may be configured to obtain a request message from the application server 110. The request message includes identification information of a terminal device and data volume information.

The processing unit 123 may be configured to temporarily store, based on the data volume information, a data packet sent by the application server 110 to the terminal device.

Herein, the request message from the application server 110 refers to a series of request messages that are initiated by the application server 110, pass through a plurality of core network elements, and finally arrive at a core network element configured to temporarily store an application data packet. The series of request messages are jointly used to request to temporarily store the application data packet.

In this application, the core network element configured to temporarily store the application data packet may include a UPF corresponding to a data network transmission access point identifier (Data Network Access Identifier, DNAI) of the application server 110, a UPF corresponding to a data network name (Data Network Name, DNN) of a local area data network (Local Area Data Network, LADN) corresponding to the application server 110, or an SMF corresponding to the terminal device.

Optionally, the processing unit 123 may be specifically a processing unit in the UPF, and the UPF may temporarily store, based on the data volume information, the data packet sent by the application server 110 to the terminal device. Optionally, the processing unit 123 may be specifically a processing unit in the SMF corresponding to the terminal device, and the SMF corresponding to the terminal device may temporarily store, based on the data volume information, the data packet sent by the application server 110 to the terminal device.

In some embodiments, the request message further includes identification information of an application. The data volume information is data volume information that is to be temporarily stored and that corresponds to the application. Further, the processing unit 123 may be specifically configured to: detect a type of the data packet sent by the application server 110 to the terminal device; determine whether the data packet is a data packet corresponding to the application; and temporarily store the data packet if the data packet is the data packet corresponding to the application. In this way, the core network device 120 can differentially process application data packets from different third-party applications, and temporarily store only an application data packet from a third-party application indicated by the identification information of the application, thereby better supporting different service requirements of a third-party service provider.

It may be understood that, for specific implementation of functional units of the core network device 120, refer to the method embodiment corresponding to FIG. 5. Details are not described herein again.

It may be learned that, by implementing the communications system 40 and the communications apparatuses in the communications system 40 shown in FIG. 11, network capabilities exposed by a mobile communications operator may include temporarily storing the application data packet, especially when the terminal device is unreachable.

It needs to be understood that the communications system 40 shown in FIG. 11 may be implemented as the communications system 100 shown in FIG. 1. The application server 700 may be the SCS/AS 100. The core network device 600 may include the network exposure function (NEF) network element 11, the access and mobility management function (AMF) network element 19, the session management function (SMF) network element 18, the user plane function (UPF) network element 14, the data network (DN) 15, the application function (AF) network element 16, the policy control function (PCF) network element 17, the unified data management (UDM) network element 20, the authentication server function (AUSF) network element 21, and the like. The access network device 500 may be the (R)AN 13. The terminal device 800 may be UE 12.

In conclusion, according to the technical solutions provided in this application, a mobile communications network can expose more network capabilities to the third-party service provider, thereby better supporting the service requirements of the third-party service provider.

A person of ordinary skill in the art may understand that all or some of the procedures of the methods in the embodiments may be implemented by a computer program instructing relevant hardware. The program may be stored in a computer-readable storage medium. When the program runs, the procedures of the methods in the embodiments are performed. The foregoing storage medium includes: any medium that can store program code, such as a ROM, a random access memory RAM, a magnetic disk, or an optical disc.

## Claims

1. A network capability exposure method performed by an access network device, the method comprising the steps of:
• obtaining (S 106) a request message from an application server, wherein the request message comprises first time information and second time information, wherein the first time information is used to set a first time duration during which a terminal device is in a first state, and the second time information is used to set a second time duration during which the terminal device is in a second state, wherein the first state is RRC connected mode, and the second state is RRC inactive mode, wherein the first time information is a maximum response time, and the second time information is a maximum delay time;
• setting (S 107), based on the first time information, the first time duration to a time duration greater than or equal to the first time information, and setting (S 107), based on the second time information, the second time duration to a time duration less than or equal to the second time information.

2. The method according to claim 1, wherein the obtaining the request message from the application server comprises:
∘ receiving the request message from the application server through an access management network element; or receiving the request message from the application server through the terminal device.

3. The method according to claim 1 or 2, wherein the request message further comprises identification information of an application, and RRC inactive mode and RRC connected mode are of the terminal device and correspond to the application.

4. A access network device (300) configured to perform any of the methods according to claims 1 - 3.

5. A communications system (100) comprising the access network device according to claim 4.

6. A computer-readable storage medium, wherein the computer-readable storage medium stores an instruction, and when the instruction is run on a computer of a network access device, the computer is caused to perform any of the methods according to claims 1 - 3.

7. A computer program product, wherein when the computer program product runs on a computer of a network device, the computer is caused to perform any of the methods according to claims 1 - 3.

## Patentansprüche

1. Netzwerkfähigkeitsexpositionsverfahren, das durch eine Zugangsnetzwerkvorrichtung durchgeführt wird, wobei das Verfahren die folgenden Schritte umfasst:
• Erlangen (S 106) einer Anforderungsnachricht von einem Anwendungsserver, wobei die Anforderungsnachricht erste Zeitinformationen und zweite Zeitinformationen umfasst, wobei die ersten Zeitinformationen verwendet werden, um eine erste Zeitdauer festzulegen, während der sich ein Endgerät in einem ersten Zustand befindet, und die zweiten Zeitinformationen verwendet werden, um eine zweite Zeitdauer festzulegen, während der sich das Endgerät in einem zweiten Zustand befindet, wobei der erste Zustand ein RRC-Verbindungsmodus und der zweite Zustand ein RRC-Inaktivmodus ist, wobei die ersten Zeitinformationen eine maximale Antwortzeit sind und die zweiten Zeitinformationen eine maximale Verzögerungszeit sind;
• Festlegen (S 107), basierend auf den ersten Zeitinformationen, der ersten Zeitdauer auf eine Zeitdauer, die größer oder gleich den ersten Zeitinformationen ist, und Festlegen (S 107), basierend auf den zweiten Zeitinformationen, der zweiten Zeitdauer auf eine Zeitdauer, die kleiner oder gleich den zweiten Zeitinformationen ist.

2. Verfahren nach Anspruch 1, wobei das Erlangen der Anforderungsnachricht von dem Anwendungsserver Folgendes umfasst:
Empfangen der Anforderungsnachricht von dem Anwendungsserver über ein Zugangsverwaltungsnetzwerkelement; oder Empfangen der Anforderungsnachricht von dem Anwendungsserver über das Endgerät.

3. Verfahren nach Anspruch 1 oder 2, wobei die Anforderungsnachricht ferner Identifikationsinformationen einer Anwendung umfasst und der RRC-Inaktivmodus und der RRC-Verbindungsmodus zu dem Endgerät gehören und der Anwendung entsprechen.

4. Zugangsnetzwerkvorrichtung (300), die dazu konfiguriert ist, ein beliebiges der Verfahren nach Anspruch 1-3 durchzuführen.

5. Kommunikationssystem (100), umfassend die Zugangsnetzwerkvorrichtung nach Anspruch 4.

6. Computerlesbares Speichermedium, wobei auf dem computerlesbaren Speichermedium eine Anweisung gespeichert ist und, wenn die Anweisung auf einem Computer einer Zugangsnetzwerkvorrichtung ausgeführt wird, der Computer dazu veranlasst wird, ein beliebiges der Verfahren nach Anspruch 1-3 durchzuführen.

7. Computerprogrammprodukt, wobei, wenn das Computerprogrammprodukt auf einem Computer einer Netzwerkvorrichtung ausgeführt wird, der Computer dazu veranlasst wird, ein beliebiges der Verfahren nach Anspruch 1-3 durchzuführen.

## Revendications

1. Procédé de présentation de capacité de réseau réalisé par un dispositif de réseau d'accès, le procédé comprenant les étapes :
• d'obtention (S 106) d'un message de demande provenant d'un serveur d'applications, dans lequel le message de demande comprend des premières informations de durée et des secondes informations de durée, dans lequel les premières informations de durée sont utilisées pour définir une première durée pendant laquelle un dispositif terminal est dans un premier état, et les secondes informations de durée sont utilisées pour définir une seconde durée pendant laquelle le dispositif terminal est dans un second état, dans lequel le premier état est le mode connecté RRC, et le second état est le mode inactif RRC, dans lequel les premières informations de durée sont une durée maximum de réponse, et les secondes informations de durée sont une durée maximum de retard ;
• de définition (S 107), sur la base des premières informations de durée, de la première durée sur une durée supérieure ou égale aux premières informations de durée, et de définition (S 107), sur la base des secondes informations de durée, de la seconde durée sur une durée inférieure ou égale aux secondes informations de durée.

2. Procédé selon la revendication 1, dans lequel l'obtention du message de demande auprès du serveur d'applications comprend : la réception du message de demande provenant du serveur d'applications par le biais d'un élément de réseau de gestion d'accès ; ou la réception du message de demande provenant du serveur d'applications par le biais du dispositif terminal.

3. Procédé selon la revendication 1 ou 2, dans lequel le message de demande comprend également des informations d'identification d'une application, et le mode inactif RRC et le mode connecté RRC appartiennent au dispositif terminal et correspondent à l'application.

4. Dispositif de réseau d'accès (300) configuré pour réaliser l'un quelconque des procédés selon les revendications 1 à 3.

5. Système de communication (100) comprenant le dispositif de réseau d'accès selon la revendication 4.

6. Support de stockage lisible par ordinateur, dans lequel le support de stockage lisible par ordinateur stocke une instruction, et lorsque l'instruction est exécutée sur un ordinateur d'un dispositif de réseau d'accès, l'ordinateur est amené à réaliser l'un quelconque des procédés selon les revendications 1 à 3.

7. Produit de programme informatique, dans lequel lorsque le produit de programme informatique est exécuté sur un ordinateur d'un dispositif de réseau, l'ordinateur est amené à réaliser l'un quelconque des procédés selon les revendications 1 à 3.
